# EUROPEAN PATENT APPLICATION

(11) **EP 1 884 909 A1**
(43) Date of publication of application: **06.02.2008**
(21) Application number: 06732591.0
(22) Date of filing: 15.05.2006
(51) Int. Cl.: G09F 9/00, B32B 7/02

(54) **DISPLAY PANEL AND FILM THEREFOR**

(30) Priority: 16.05.2005 JP 2005142855
(71) Applicant: Bridgestone Corporation, Tokyo 104-8340 (JP)
(72) Inventor: SUGIMACHI, Masato, Bridgestone Corporation, Yokohama-shi, Kanagawa 2440812 (JP); ISHII, Yorinobu, Bridgestone Corporation, Yokohama-shi, Kanagawa 2440812 (JP)
(74) Representative: Whalley, Kevin
(86) International application number: PCT/JP2006/309660
(87) International publication number: WO 2006/123612

(57) **Abstract**

A multifunctional thin display panel film 1 includes a base film 2, a conductive mesh 3 disposed on a surface of the base film 2, an absorption layer 4 covering the conductive mesh 3 and being disposed on the surface of the base film 2 to absorb neon-emission light and infrared light, an adhesive layer 5 disposed on the near-infrared absorption layer 4, and an antireflection layer 6 disposed on the other surface of the base film 2.

## Description

### Field of the Invention

The present invention relates to display panels such as a plasma display panel (PDP) and to display panel films attached on the front surface of display panels.

### Background of the Invention

As a front filter for a PDP or the like, a laminated filter composed of a near-infrared cut film having a near-infrared absorption layer disposed on a base film, an antireflection film having an antireflection layer disposed on a base film, and a conductive mesh held between the near-infrared cut film and the antireflection film, the conductive mesh acting as an electromagnetic wave shield is described in paragraph [0050] of Japanese Unexamined Patent Application Publication No. 2001-320193.
Patent Document 1: Japanese Unexamined Patent Application Publication No. 2001-320193

As described in Japanese Unexamined Patent Application Publication No. 2001-320193, the front filter in which the near-infrared cut film and the antireflection film are stacked has a large thickness as a whole, because each of the near-infrared cut film and the antireflection film has a respective base film and, further, an adhesive layer is needed to stack the near-infrared cut film and the antireflection film. Furthermore, since a film-bonding process in which the individual films are bonded together is needed, a production line cannot be operated at a high speed. Furthermore, since the film-bonding process is additionally performed, defects caused by contaminated foreign matter or flaws may increasingly occur. As a result, productivity and cost effectiveness are inefficient.

### Summary of the Invention

An object of the present invention is to provide a multifunctional thin display-panel-film and a display panel having the multifunctional thin film.

A display panel film of the present invention is a film in which a conductive layer for shielding electromagnetic waves, a near-infrared absorption layer, and an antireflection layer are stacked on a base film.

The film is attached on a front surface of a display panel.

The display panel film of the present invention includes a near-infrared absorption layer, a conductive layer, and an antireflection layer that are provided on a base film. The thickness of the filter is small because only one base film is used. Furthermore, since a film-bonding process is not needed, defects caused by contaminated foreign matter or flaws can be prevented from occurring, productivity is improved, and manufacturing cost is reduced.

### Brief Description of the Drawings

[Fig. 1] Fig. 1 is a schematic cross-sectional view showing an embodiment of the display panel film of the present invention.
[Fig. 2] Fig. 2 is an enlarged view of an example of the antireflection layer.
[Fig. 3] Fig. 3 is an enlarged view of an edge portion of the display panel film.
[Fig. 4] Fig. 4 is a cross-sectional view illustrating a method for forming the edge portion shown in Fig. 3.
[Fig. 5] Fig. 5 is a schematic cross-sectional view showing a display panel film according to another embodiment.
[Fig. 6] Fig. 6 is a schematic cross-sectional view showing a display panel film according to another embodiment.
[Fig. 7] Fig. 7 is a schematic cross-sectional view showing a display panel film according to another embodiment.

### Detailed Description of the Invention

Embodiments of the present invention are described below with reference to the drawings.

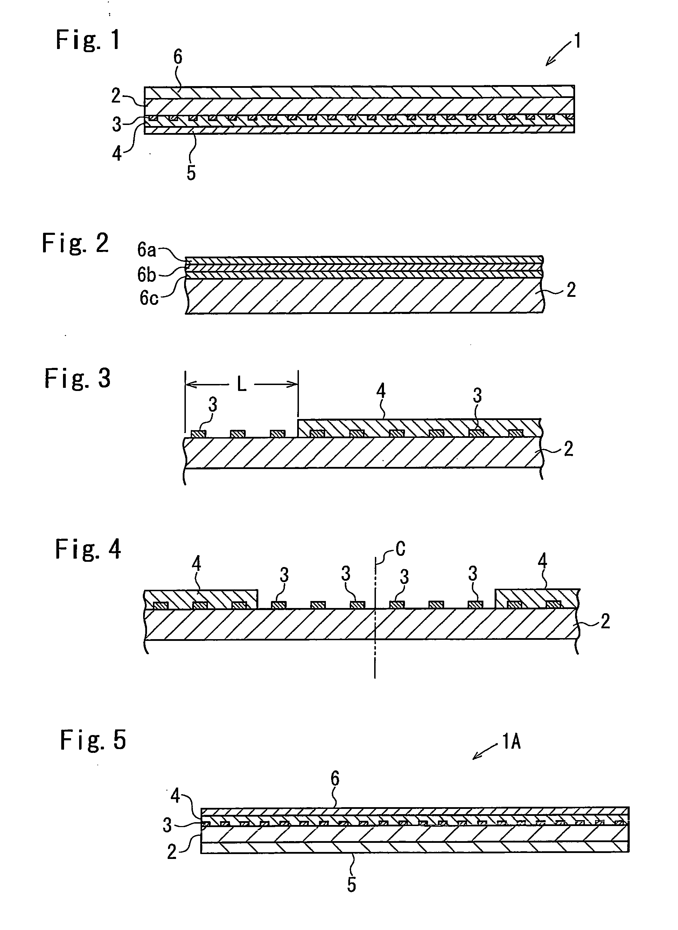

Figs. 1, 5, 6, and 7 are schematic cross-sectional views showing a display panel film according to each embodiment.

A display panel film 1 shown in Fig. 1 includes a base film 2, a conductive mesh 3 as a conductive layer disposed on one of the surfaces of the base film 2, a near-infrared absorption layer 4 (hereinafter may be referred to as "absorption layer 4") disposed on the surface of the base film and covering the conductive mesh 3, an adhesive layer 5 disposed on the absorption layer 4, and an antireflection layer 6 disposed on the other surface of the base film 2.

The display panel film 1 using only one base film 2 is small in thickness.

As examples of the base film 2 include transparent films such as polyester, polyethylene terephthalate (PET), polybutylene terephthalate, polymethyl methacrylate (PMMA), acrylic, polycarbonate (PC), polystylene, cellulose triacetate (TAC), polyvinyl alcohol, polyvinyl chloride, polyvinylidene chloride, polyethylene, ethylene-vinyl acetate copolymers, polyurethane, and cellophane films, and preferably, a transparent film, such as PET, PC, and PMMA films is used.

The thickness of the base film 2 is 1 µm to 10 mm, preferably 10 to 1000 µm.

As the conductive mesh 3, a conductive mesh composed of metal fibers and/or metal-coated organic fibers may be used. In the present invention, it is preferable that the conductive mesh 3 is, for example, composed of fibers having a diameter of 1 µm to 1 mm and has an opening ratio of 40 to 95% in order to enhance light transmittance thereof and to prevent generation of moiré fringes. When the diameter of the fibers used in the conductive mesh is more than 1 mm, the opening ratio of the conductive mesh 3 decreases or an electromagnetic-wave-shielding property deteriorates. The opening ratio and the electromagnetic-wave-shielding property are incompatible. When the diameter of the fibers used in the conductive mesh is less than 1 µm, the strength of the conductive mesh is lowered, which leads to significant difficulty in handling of the conductive mesh. Furthermore, if the opening ratio exceeds 95%, the conductive mesh can hardly maintain its shape. If the opening ratio is less than 40%, the light transmittance becomes low and the amount of light emitted from a display decreases. More preferably, the diameter of the fibers is 10 to 500 µm and the opening ratio is 50 to 90%.

The opening ratio of the conductive mesh means a ratio of a total opening area to a total projected area of the conductive mesh.

Examples of the metals used in the metal fibers or the metal-coated organic fibers constituting the conductive mesh 3 include copper, stainless steel, aluminum, nickel, titanium, tungsten, tin, lead, iron, silver, chromium, carbon, and alloys of these metals, preferably, copper, nickel, stainless steel, and aluminum.

Examples of the organic material of the metal-coated organic fibers include polyester, nylon, vinylidene chloride, aramid, vinylon, and cellulose.

In the present invention, in particular, in order to maintain the above-mentioned opening ratio of the conductive mesh and the diameter of the fibers, a conductive mesh composed of metal-coated organic fibers having a property of being good at maintaining a mesh shape is preferably used.

As the electromagnetic wave shield, an etching mesh or a printed conductive mesh can be used instead of the above-mentioned conductive mesh.

As the etching mesh, an etching mesh formed by etching a metal film into arbitrary shapes using a photolithography method such as a grid metal mesh or a punching metal mesh can be used. As the metal film, a metal film composed of the base film 2 and a metal layer of, for example, copper, aluminum, stainless steel, or chromium, which is formed on the base film 2 by vapor deposition or sputtering can be used. Also, as the metal film, a metal film composed of the base film and a metallic foil that is bonded to the base film using an adhesive agent can be used. An epoxy, urethane, EVA adhesive, or the like is preferably used as the adhesive agent.

It is preferable that printing using a black color is performed in advance on one surface or both surfaces of the metal film. By using a photolithography method, the shape, diameter, and the like of conductive portions of the etching mesh can be freely designed, so that the opening ratio of the metal film can be made higher than that of the conductive mesh.

In order to form a printed conductive mesh, metal particles such as silver, copper, aluminum, or nickel particles, or nonmetallic conductive particles such as carbon particles are mixed with a binder such as an epoxy, urethane, EVA, melanin, cellulose, or acrylic binder. Then a grid pattern or the like, which is made of the above-mentioned mixture, is printed on the base film 2 by gravure printing, offset printing, or screen printing. This mesh can be used as a printed conductive mesh.

Furthermore, a conductive mesh that is formed on a film surface, by forming, on the film surface, dots made of a material soluble in a solvent, disposing, on the film surface and dots, a conductive material layer made of a material insoluble in the solvent, exposing the film surface to the solvent so as to remove the dots and the conductive material layer on the dots, may be used as the conductive mesh.

In order to enhance an electromagnetic wave shielding effect, a plating layer may be formed on the conductive layer to reduce the electrical resistance of the conductive layer.

Examples of a material for a plating process include copper, nickel, chromium, zinc, tin, silver, and gold. The above-mentioned materials may be used alone or as an alloy of two or more. Generally, liquid phase plating (e.g., electrolytic plating, electroless plating) is used as the plating process.

Furthermore, an anti-glare function may be added. To provide the anti-glare function, a blackening treatment may be performed on the surface of the conductive mesh. For example, oxidation of a metal film or black plating of a chromium alloy, etc., can be performed, or a coating of black or dark color ink can be applied.

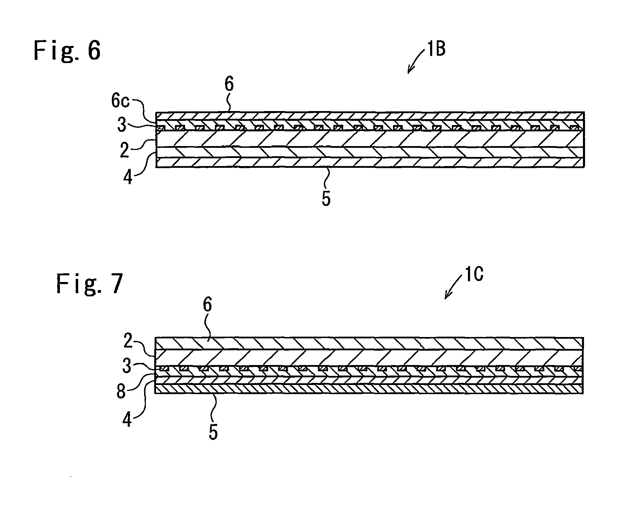

In the present invention, as in the display panel film 1C shown in Fig. 7, a transparency-enhancing layer 8 covering the conductive mesh 3 may be provided. The transparency-enhancing layer has an effect of enhancing the transparency of the display panel film by planarizing unevenness of the conductive mesh. As the transparency-enhancing layer, a transparent adhesive agent, for example, an acrylic adhesive agent such as butyl acrylate, a rubber-based adhesive agent, a TPE-based adhesive agent containing a thermoplastic elastomer resin such as SEBS or SBS as a base material, or the like can be used.

The transparency-enhancing layer 8 can be formed by a coating process, for example. The thickness of the transparency-enhancing layer is 5 to 500 µm, preferably, about 10 to 100 µm.

The near-infrared absorption layer 4 can be formed by coating a solution composed of an ultraviolet light curable synthetic resin coating agent solution containing near-infrared absorbing dyes, or composed of an electron light curable synthetic resin coating agent solution containing near-infrared absorption dyes.

The near-infrared absorption dyes are not particularly limited as long as the maximum absorption wavelengths of the dyes are in the range of 800 to 1200 nm. Dyes such as phthalocyanine, metal complex, nickel dithiolene complex, cyanine, squalirium, polymethine, azomethine, azo, polyazo, diimonium, aminium, and anthraquinone based dyes can be used as the near-infrared absorption dyes.

In the present invention, a color controlling function can be provided based on a function of absorbing light in a neon emission band. In order to provide the function, a neon emission absorption layer may be provided, or a selective absorption dye for neon emission light may be contained in the above-mentioned near-infrared absorption layer.

Examples of selective absorption dyes for neon emission include cyanine, squalirium, anthraquinone, phthalocyanine, polymethine, polyazo, azlenium, diphenylmethane, and triphenylmethane based dyes. These selective absorption dyes are desired to selectively absorb light having wavelength of about 585 nm in a neon emission band and are desired to negligibly absorb light in the remainder of the other visible light waveband. Therefore, selective absorption dyes having the maximum absorption wavelength in the range from 575 to 595 nm, and having an absorption spectrum band that is equal to 40 nm or less in half-width are preferably used.

In the case that a plurality of the absorption dyes, which include a dye for absorbing near-infrared light or a dye for absorbing neon emission light, are used in combination, if there are difficulties in terms of solubility of dyes in a production process, if there are undesirable reactions among mixed dyes, and if deterioration of thermal resistance or moisture resistance occurs, it is not desirable for all the near-infrared absorption dyes to be contained in the same layer, of course, and the near-infrared absorption dyes are preferably disposed in different layers in such a case.

Furthermore, coloring materials, ultraviolet absorbers, and antioxidants may be added as long as those materials negligibly affect the optical properties of the film.

As the optical property of the film having a near-infrared absorption property, the transmittance of light in a wavelength range of 850 to 1000 nm may be 20% or lower, more preferably, 15% or lower. As the selective absorption property of the film, the transmittance of light at a wavelength of about 585 nm is preferably 50% or lower. For the former property, the main purpose is to decrease a transmittance of light existing in the wavelength range and being thought to be a cause of malfunction of remote control systems in peripheral devices. For the latter property, since the orange light having its peak wavelength in the range of 575 to 595 nm deteriorates color reproductivity, the main purpose is to absorb the wavelength of orange light so as to make red light more intrinsic and improve reproducibility of colors.

The thickness of the absorption layer 4 is preferably 0.5 to 50 µm.

The adhesive layer 5 allows the display panel film 1 to be attached to the PDP, glass substrate, or the like. Examples of the adhesive layer 5 include a transparent adhesive agent, for example, an acrylic adhesive agent such as butyl acrylate, a rubber adhesive agent, or a TPE adhesive agent containing thermoplastic elastomer resin such as SEBS or SBS as a base material.

The thickness of the adhesive layer is 5 to 500 µm, preferably about 10 to 100 µm.

Examples of an antireflection layer 6 include a layer composed of a low-refractive-index layer alone or a laminated layer in which a high-refractive-index layer and a low-refractive-index layer are laminated so as to expose the surface of the low-refractive-index layer to the outside. A hard-coat layer may be provided between the high-refractive-index layer and the base film 1. Fig. 3 is a schematic cross-sectional view showing a laminate structure composed of a hard-coat layer 6c, a high-refractive-index layer 6b, and a low-refractive-index layer 6a.

Matrices of the layers 6a, 6b, and 6c are composed of synthetic resins, and as the synthetic resins, an ultraviolet light curable synthetic resin or an electron light curable synthetic resin, preferably a polyfunctional acrylic resin may be used.

It is preferable that one of the high-refractive-index layer 6b and the hard-coat layer 6c includes conductive metal oxide microparticles composed of ITO, ATO, Sb₂O₃, SbO₂, In₂O₃, SnO₂, ZnO, or the like. In particular, it is preferable that the surface resistance of the hard-coat layer 6c is decreased to 5 × 10¹⁰ Ω/□ or lower so that the antireflection film has an antistatic function.

The high-refractive-index layer 6b having a refractive index of 1.64 or more is preferably provided by combining high-refractive-index metal oxide microparticles composed of ITO (indium tin oxide), ZnO, aluminum-doped ZnO, TiO₂, SnO₂, ZrO, or the like.

When the high-refractive-index layer 6b is electrically conductive, by increasing the refractive index of the high-refractive-index layer 6b to 1.64 or more, the minimum reflectance of the surface of the antireflection film can be suppressed to 1.5% or lower. If the refractive index of the high-refractive-index layer 6b is 1.69 or more, preferably 1.69 to 1.82, the minimum reflectance of the surface of the antireflection layer 6 can be suppressed to 1.0% or lower.

When the hard-coat layer 6c is electrically conductive, by increasing the refractive index of the high-refractive-index layer 6b to 1.70 or more, the minimum reflectance of the surface of the antireflection layer 6 can be suppressed to 1.5% or lower. If the refractive index of the high-refractive-index layer 6b is 1.75 or more, the minimum reflectance of the surface of the antireflection layer 6 can be suppressed to 1.0% or lower.

The transmittance of visible light through the hard-coat layer 6c is preferably 85% or more. Transmittances of visible light through the high-refractive-index layer 6b and the low-refractive-index layer 6a are preferably 85% or more.

In the low-refractive-index layer 6a, microparticles made of silica, fluorocarbon resin, or the like are preferably contained in an amount of about 10 to 40% by weight in order to lower the refractive index and to improve scratch resistance and slip resistance. If an acrylic resin is used as a matrix of the low-refractive-index layer 6a as mentioned above, cost reduction, enhancement of the film strength, chemical resistance, moisture resistance, and thermal resistance can be improved.

The refractive index of the low-refractive-index layer 6a, i.e., the surface layer, is preferably 1.45 to 1.51. When the refractive index of the low-refractive-index layer 6a exceeds 1.51, the antireflective property of the antireflection film deteriorates. In the films 1 and 1C, and the films 1A and 1B which are described below, (T₁ - T₂), which is the difference between T₁ that is the total thickness of the film 1, 1A, 1B, or 1C and T₂ that is the thickness of the base film 2, is preferably 100 µm or lower.

The thickness of the hard-coat layer 6c is preferably 2 to 20 µm, the thickness of the high-refractive-index layer 6b is preferably 75 to 90 nm, and the thickness of the low-refractive-index layer 6a is preferably 85 to 110 nm.

In the films 1 and 1C, and the films 1A and 1B which are described below, (T₁ - T₂), which is the difference between T₁ that is the total thickness of the film 1, 1A, 1B, or 1C and T₂ that is the thickness of the base film 2, is preferably 100 µm or lower.

To form layers 4 and 6 (6a, 6b, 6c), as mentioned above, preferably, uncured synthetic resin (the above-mentioned microparticles are contained in the resin if needed) is applied, and then exposed to ultraviolet light or electron light. In these processes, an applying process and a curing process may be alternately performed for each layer, or a curing process for all the layer, for example two layers or more, may be performed in one operation after the resin is applied to each of the layers.

As a specific example of the methods of an applying process, there is a method in which an acrylic monomer dissolved in a solvent such as toluene is used as a coating liquid, the coating liquid is applied using a gravure coater, and then the coating liquid is dried and cured using ultraviolet light or electron light. This method, i.e., a wet coating method has an advantage that uniform films can be formed in a short time at a low production cost. A curing process using, for example, ultraviolet radiation or electron radiation after the performance of the wet coating has an effect of improving the adhesion and hardness of the films.

In the display panel film of the present invention, as shown in Fig. 3, a structure near an edge of the base film 2 may provide a zone in which an edge portion of the conductive mesh 3 is exposed. The exposed zone is provided by moving an edge of the absorption layer 4, which is composed of a neon emission and near-infrared absorption layer, from the edge of the base film 2 toward the inside thereof. Since the edge portion of the conductive mesh 3 is exposed, the conductive mesh 3 can be easily connected to a ground circuit. Note that the width of the exposed zone is preferably about 1 to 200 mm.

To manufacture the display panel film having zones in which the end portion of the conductive mesh 3 is exposed, the following method is preferably used (see Fig. 4). That is, a conductive mesh 3 is formed as a continuous layer on an original film 20 (long strip-shaped film) that is later divided into base films 2 in a longitudinal direction of the original film 20. Then absorption layer 4 is formed in discrete portions on the conductive mesh 3. This absorption layer 4 is not formed as a continuous layer in a longitudinal direction of the original film 20 but formed in discrete portions each having a size of a film product, so that zones in which the conductive mesh 3 is exposed are formed between the adjacent absorption layers 6. The original film 20 and the conductive mesh 3 are cut along a width direction of the original film 20 through a central portion C in each of zones in which the conductive mesh is exposed. By conducting the above-mentioned method, as shown in Fig. 3, the display panel film 1 having exposed zones in which the edge of the conductive mesh 3 is exposed, can be obtained.

Embodiments different from above-mentioned embodiment shown in Fig. 1 are described with reference to Figs. 5 to 7.

A display panel film 1A shown in Fig. 5, includes a conductive mesh 3, a near-infrared absorption layer 4, and an antireflection layer 6, which are stacked in that order on a surface of a base film 2 and includes an adhesive layer 5 formed on the other surface of the base film 2.

A display panel film 1B shown in Fig. 6 includes a conductive mesh 3, a hard-coat layer 6c, and an antireflection layer 6, which are formed on a surface of a base film 2, and includes a near-infrared absorption layer 4 and an adhesive layer 5 on the other surface of the base film 2.

A display panel film 1C shown in Fig. 7 further includes a transparency-enhancing layer 8 covering the conductive mesh 3. The display panel film 1C has a near-infrared absorption layer 4 and an adhesive layer 5 on the transparency-enhancing layer 8. The structure except for the above-mentioned components is the same as the structure shown in Fig. 1.

These display panel films 1A to 1C have similar effects to those of the above-mentioned display panel film 1.

## Claims

1. A display panel film comprising a conductive layer for shielding electromagnetic waves, a near-infrared absorption layer, and an antireflection layer disposed on a base film.

2. The display panel film according to claim 1, further comprising a hard-coat layer.

3. The display panel film according to claim 1, wherein the conductive layer is a conductive mesh.

4. The display panel film according to claim 1, wherein a difference between a total thickness T₁ of the film and a thickness T₂ of the base film, i.e., (T₁ - T₂) is 100 µm or smaller.

5. The display panel film according to claim 1, further comprising an adhesive layer for bonding the display panel film to a display.

6. The display panel film according to claim 1, wherein the conductive layer is exposed at the vicinity of an edge portion of the base film.

7. The display panel film according to claim 6, wherein the display panel film is manufactured by forming a conductive layer on an original film, forming another layer thereon in discrete portions so as to provide exposed portions of the conductive layer, and cutting the exposed portions of the conductive layer along the width direction of the original film.

8. The display panel film according to claim 1, wherein the near-infrared absorption layer includes a selective absorption dye absorbing light in a neon-emission band and the near-infrared absorption layer absorbs light in the neon-emission band.

9. A use of the display panel film according to claim 1 as a display panel film to be attached to a display panel.

10. A display panel having the display panel film according to claim 1, wherein the display panel film is attached to the display panel.
